## Europäisches Patentamt

## European Patent Office

## Office européen des brevets

(11) Veröffentlichungsnummer: **0 267 648**
**A1**

# (12) EUROPÄISCHE PATENTANMELDUNG

(21) Anmeldenummer: 87202136.5

(22) Anmeldetag: 05.11.87

(51) Int. Cl.⁴: **C04B 37/00**

(30) Priorität: 14.11.86 DE 3639021

(43) Veröffentlichungstag der Anmeldung:
**18.05.88 Patentblatt 88/20**

(84) Benannte Vertragsstaaten:
**DE FR GB NL**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB NL**

(72) Erfinder: **Liehr, Manfred**
**Strehlowweg 38**
**D-2000 Hamburg 52(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) Verfahren zum Verlöten von keramischen Bauteilen.

(57) Bei einem Verfahren zum stoffschlüssigen und vakuumdichten Verbinden von keramischen Bauteilen aus Aluminiumoxid in einer Schutzgasatmosphäre werden die Bauteile unter Wärmeeinwirkung und unter Verwendung eines Lotes miteinander verbunden. Die Verlötung der Bauteile erfolgt in einem Schutzgas, das ein Gemisch aus Luft und Stickstoff ist. Als Lot wird ein Kupfer/Silber-Lot eingesetzt, von dem einzelne Bestandteile in die Oberflächen der Bauteile während des Lötvorganges eindiffundieren.

## Verfahren zum Verlöten von keramischen Bauteilen

Die Erfindung bezieht sich auf ein Verfahren zum stoffschlüssigen und vakuumdichten Verbinden von keramischen Bauteilen aus Aluminiumoxid in einer Schutzgasatmosphäre und unter Verwendung eines die Bauteile unter Wärmeeinwirkung verbindenden Lotes.

In einem ersten bekannten Verfahren zum Verbinden von keramischen Bauteilen wird, um ein gutes Benetzungsverhalten der Lote beim Löten zu erreichen, die Keramik vor dem Verlöten metallisiert. Dazu werden beispielsweise in einem bekannten, sogenannten Mo-Mn-Verfahren Molybdänpartikel (Mo) und eine Restmenge aus Mangan (Mn) und Siliciumdioxid (SiO$_2$) unter feuchter Schutzgasatmosphäre (H$_2$/N$_2$) eingeschmolzen. Die dabei entstehenden Manganoxide verbinden sich unter Mischoxidbildung mit der Aluminiumoxidkeramik (Al$_2$O$_3$) Das glasbildende Siliciumdioxid verbessert die Einbettung bzw. Haftung der Molybdänpartikel. Die aus dieser Deckschicht (Metallisierung) herausragenden Molybdänpartikel, die gegebenenfalls noch mit einer Mattnickelschicht versehen werden, ermöglichen dann eine Bindung zum metallischen Lot. Bei einem ähnlichen aus der DE-PS 700 840 bekannten Verfahren wird auf die Keramik vor dem Verlöten ein Metall aufgesintert. Die Verlötung wird anschließend in schwach reduzierender Atmosphäre vorgenommen.

Bei einem weiteren Verfahren zum Verlöten von keramischen Bauteilen aus Aluminiumoxid ist eine Metallisierung der zu verlötenten Oberfläche der Keramik nicht erforderlich. Bei diesem Verfahren wird beim Verlöten ein sogenanntes Aktivlot eingesetzt. Aktivlote enthalten neben dem Basislot zusätzlich zulegierte, hochreaktive Metalle, wie beispielsweise Titan (Ti) oder Zirkon (Zr). Diese zulegierten Metalle werden als Aktivkomponenten bezeichnet und besitzen eine besonders hohe Affinität zu Sauerstoff. Diese Eigenschaft wird genutzt, der Aluminiumoxidkeramik teilweise den Sauerstoff zu entziehen, um Oxide zu bilden. Die so entstandenen Oxide des Titans bzw. des Zirkons sind unter Mischoxidbildung in den Keramikoxiden löslich. Unter Mitnahme des Basislotes diffundieren sie in die Oberfläche der Keramik ein und stellen so eine gute Verbindung her. Die Verbindung bzw. Benetzung findet aber nur an den direkt mit dem Lot in Kontakt stehenden Stellen statt. Das bedeutet, daß kein Fließen in einem vorhandenen Lötspalt stattfindet.

Diese bekannten Verfahren zum Verlöten von keramischen Bauteilen aus Aluminiumoxid haben jedoch einige Nachteile. Bei dem ersten Verfahren, bei dem die Keramik metallisiert wird, um eine genügende Haftung und Benetzung des Lotes auf der Keramik sicherzustellen, sind für die Durchführung der Metallisierung bis zu sechs Prozeßschritte durchzuführen, die das Verfahren sehr aufwendig und damit wenig wirtschaftlich machen. Für den Einsatz des zweiten Verfahrens werden Aktivlote benötigt, von denen kommerziell nur sehr wenige zur Verfügung stehen. Darüber hinaus sind diese Aktivlote infolge der Beimengung der von mit Sauerstoff hochreaktiven Metallen sehr teuer. Außerdem ist dieses Lot nicht in der Lage, den Spalt zwischen den zu verbindenden Teilen auszufüllen, da die Aktivkomponente nur dort wirkt, wo das Lot vor der Erwärmung deponiert wurde.

Aus der CH-PS 328 016 ist ein Verfahren zum Verbinden keramischer Gegenstände miteinander oder mit Metallgegenständen bekannt, bei dem eine spezielle Paste eingesetzt wird, die aus einer Mischung aus Silberoxid und Kupferoxid besteht. Die Paste wird vor dem Verlöten auf die Keramiken aufgebracht. Das Mischungsverhältnis der beiden Oxide in der Paste bestimmt beim späteren Verlöten die Qualität der Benetzung der Keramiken und der Haftfähigkeit der Verlötung. Dies Verfahren hat vor allem den Nachteil, daß die Herstellung einer speziellen Paste notwendig ist. Dabei ist es erforderlich, das Mischungsverhältnis der beiden Oxide in der Paste genau einzustellen, weshalb die Herstellung einige Probleme bereitet.

Es ist Aufgabe der Erfindung, ein Verfahren zum stoffschlüssigen und vakuumdichten Verbinden von keramischen Bauteilen aus Aluminiumoxid zu schaffen, das eine sichere, nicht zum Sprödbruch neigende Verbindung der keramischen Bauteile gestattet und das wirtschaftlich einsetzbar ist.

Diese Aufgabe ist erfindungsgemäß dadurch gelöst, daß die Verlötung der Bauteile in einem Schutzgas vorgenommen wird, das ein Gemisch aus Luft und Stickstoff ist, daß als Lot ein Kupfer/Silber-Lot eingesetzt wird, von dem einzelne Bestandteile in die Oberflächen der Bauteile während des Lötvorganges eindiffundieren, und daß mittels Einstellung des Mischungsverhältnisses zwischen Luft und Stickstoff in dem Schutzgas der Oxidationsgrad des Kupfers beim Verlöten eingestellt wird.

Bei diesem Verfahren wird also ein aus Kupfer und Silber bestehendes Lot eingesetzt, der in einem Schutzgas, welches ein Gemisch aus Luft und Stickstoff ist, zum Verlöten der keramischen Bauteile eingesetzt wird. Dieses Verfahren hat gegenüber den bekannten u. a. den Vorteil, daß dem Lot keine Aktivkomponente zulegiert werden muß und daß das Lot in der Lage ist, während des Lötprozesses den Lötspalt zu füllen. Es kann handelsübliches Kupfer/Silber eingesetzt werden. Die gute Haftung des Lotes an dem Keramikmaterial wird dadurch erreicht, daß beim Verlöten das im Lot befindliche Kupfer zu Kupferoxid oxidiert und dieses Kupferoxid in die Aluminiumoxidkeramik eindiffundiert. Die gute Haftung des Lotes wird durch diesen Diffusionsprozeß bewirkt. Da das Silber nur in der Lage ist, mit dem Kupfer eine feste Phase zu bilden, ist in dieser Diffusionszone kaum Silber anzutreffen. Das Silber befindet sich zwischen den beiden Kupferoxidschichten und wirkt so als Lot auf der während des Lötprozesses automatisch stattfindenden Metallisierung der Aluminiumoxid-Oberfläche durch Kupferoxid.

Bei diesem Verfahren erübrigt sich also sowohl die Metallisierung der keramischen Bauteile vor dem Lötprozeß, wie auch der Einsatz teurer Aktivlote. Es wird vielmehr konventionelles Kupfer/Silber-Lot eingesetzt, dessen Kupferanteil, der beim Verlöten zu Kupferoxid oxidiert, in die Oberflächen der Aluminiumoxidkeramik eindiffundiert und auf diese Weise eine gute Verbindung zu dieser herstellt. Das Silber in dem Lot mit seinem guten Fließverhalten dient vor allem zum Verbinden der Aluminiumoxidteile und somit zum Füllen des Lötspaltes.

Der Kupferanteil in dem Lot, dessen Oxidation und anschließende Eindiffusion in die Keramik die gute Lötverbindung gestattet, kann bis nahe an 100% Volumenanteil in dem Lot betragen. Ein Restsilberanteil wird jedoch für Benetzung oder Lötung benötigt.

Das Mischungsverhältnis zwischen Luft und Stickstoff in dem Schutzgas, in dem die Verlötung der Bauteile vorgenommen wird, bestimmt, wieviel Kupferoxid bei der Verlötung entstehen kann. Auf diese Weise können also wesentliche Parameter der Verlötung, wie z. B. die Qualität der Benetzung der Oberflächen und die Haftfähigkeit der Verlötung, auf einfache Weise mittels Einstellung des Mischungsverhältnisses zwischen Luft und Stickstoff im Schutzgas vorgenommen werden. Auch ist auf diese Weise eine einfache Anpassung an veränderte Materialien oder veränderte Randbedingungen bei der Verlötung möglich. Es ist keine Lötpaste erforderlich, die bestimmte Materialien in genau definierten Mischungsverhältnissen enthält, um ein Steuern des Kupferoxidanteils vorzunehmen.

Dieses Verfahren zum Verlöten von keramischen Bauteilen aus Aluminiumoxid kombiniert also wesentliche Vorteile der bekannten Verfahren. Es ist keine Vorbereitung der keramischen Bauteile, beispielsweise durch Metallisierung derselben, erforderlich. Die eingesetzten Lote sind konventionelle, kommerziell erhältliche Lote, die relativ preiswert sind, da ihnen keine mit Sauerstoff hochreaktiven Metalle zulegiert werden müssen, und sie füllen vorhandene Lötspalte aus, ohne vor Beginn der Lötung manuell in den Lötspalt eingebracht zu werden.

Nach einer weiteren Ausgestaltung der Erfindung ist vorgesehen, daß sich das Schutzgasgemisch etwa zu 54 Vol.% aus Stickstoff und zu 46 Vol.% aus Luft zusammensetzt. Diese Zusammensetzung des Schutzgasgemisches hat sich als besonders vorteilhaft erwiesen, da bei diesem Mischungsverhältnis von Luft und Stickstoff gerade die gewünschte Oxidation des Kupfers stattfindet. Bei einem zu hohen Sauerstoffanteil in der Schutzgasatmosphäre kommt es während der Lötphase zu einer Überreaktion. Der Löttropfen weist dann eine poröse Oberfläche auf, so daß die Lötung infolge von Rissen und einer Grobkornbildung nicht brauchbar ist. Ist der Sauerstoffanteil in der Schutzgasatmosphäre zu gering, ist die Oxidbildung nicht ausreichend um eine Haftung auf der Keramik sicherzustellen.

Nach einer weiteren Ausgestaltung der Erfindung ist vorgesehen, daß als Lot ein eutektisches Kupfer/Silber-Lot eingesetzt wird. Der Einsatz von eutektischem Kupfer/Silber-Lot hat sich als vorteilhaft erwiesen, da dieses Lot einerseits ein gutes Fließverhalten und damit ein gutes Benetzen der zu verlötenden Oberflächen der Keramikbauteile gewährleistet und andererseits in diesem Lot genügend Kupfer vorhanden ist, das zu Kupferoxid oxidieren kann und somit eine gute Haftung auf der Keramik herstellt.

Nach einer weiteren Ausgestaltung der Erfindung ist vorgesehen, daß das Verlöten bei einer Temperatur von etwa 1120°C vorgenommen wird.

Wird beispielsweise eutektisches Kupfer/Silber-Lot eingesetzt, so liegt dessen Verflüssigungstemperatur bei etwa 780°C. Diese Temperatur genügt jedoch beim Verlöten nicht, da das sich bildende Kupferoxid noch nicht schmilzt und somit auch nicht in die Oberfläche der Keramik eindiffundieren kann. Es hat sich herausgestellt, daß eine Temperatur von etwa 1120°C beim Verlöten besonders günstig ist. Bei dieser Temperatur ist sichergestellt, daß sich eine kupferoxidhaltige Schmelzphase bildet, die in die Keramik eindiffundiert.

Nach einer weiteren Ausgestaltung der Erfindung ist vorgesehen, daß eine sich beim Verlöten der Oberfläche des Lots absetzende Kupferoxid-Haut mittels eines Reduktionsprozesses beseitigt wird, der in der Abkühlphase des Lotes eingeleitet wird.

Wie bereits erwähnt, sammelt sich im erstarrten Lot oberhalb der Diffusionszone reines Silber an, in dem sich Kupfer-Oxid-Einschlüsse befinden. Die freie Oberfläche des erstarrten Lotes ist mit einer Oxidhaut überzogen. Diese Oxidhaut kann vorteilhafterweise mittels eines in der Abkühlphase eingeleiteten Reduktionsprozesses beseitigt werden. Die Reduktion des Kupferoxides wird dadurch eingeleitet, indem Wasserstoff zugeführt wird.

## Ansprüche

1. Verfahren zum stoffschlüssigen und vakuumdichten Verbinden von keramischen Bauteilen aus Aluminiumoxid in einer Schutzgasatmosphäre und unter Verwendung eines die Bauteile unter Wärmeeinwirkung verbindenden Lotes, dadurch gekennzeichnet, daß die Verlötung der Bauteile in einem Schutzgas vorgenommen wird, das ein Gemisch aus Luft und Stickstoff ist, daß als Lot ein Kupfer/Silber-Lot eingesetzt wird, von dem einzelne Bestandteile in die Oberflächen der Bauteile während des Lötvorganges eindiffundieren, und daß mittels Einstellung des Mischungsverhältnisses zwischen Luft und Stickstoff in dem Schutzgas der Oxidationsgrad des Kupfers beim Verlöten eingestellt wird.

2. Verfahren nach Anspruch 1, dadurch gekennzeichnet, daß sich das Schutzgas-Gemisch etwa zu 54 Vol.% aus Stickstoff und zu 46 Vol.% aus Luft zusammensetzt.

3. Verfahren nach Anspruch 1 oder 2, dadurch gekennzeichnet, daß als Lot ein eutektisches Kupfer/Silber-Lot eingesetzt wird.

4. Verfahren nach einem oder mehreren der Ansprüche 1 bis 3, dadurch gekennzeichnet, daß das Verlöten bei einer Temperatur von etwa 1120°C vorgenommen wird.

5. Verfahren nach einem oder mehreren der Ansprüche 1 bis 4, dadurch gekennzeichnet, daß eine sich beim Verlöten an der Oberfläche des Lotes absetzende Kupferoxid-Haut mittels eines Reduktionsprozesses beseitigt wird, der in der Abkühlphase des Lotes eingeleitet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 968 557 (N.V. PHILIPS' GLOEILAMPENFABRIEKEN) <br> * Ansprüche 1,3; Seite 2, Spalte 1, Zeilen 19-24,41-44; Seite 3, Spalte 1, Zeilen 1-7 * | 1,3,4 | C 04 B 37/00 |
| A | --- | 2 | |
| X | GB-A-1 374 763 (UNITED KINGDOM ATOMIC ENERGY AUTHORITY) <br> * Ansprüche 1,3-8,10; Seite 2, Spalte 2, Zeilen 101-114 * | 1,3,5 | |
| A | --- | 2 | |
| A | GB-A- 761 045 (LODGE PLUGS LTD) <br> * Ansprüche 2,3; Seite 1, Spalte 1, Zeile 44 - Spalte 2, Zeile 52; Seite 2, Spalte 1, Zeilen 18-25; Seite 4, Spalte 2, Zeilen 81-87 * <br> --- | 1,4 | |
| A | DE-B-1 082 179 (N.V. PHILIPS' GLOEILAMPENFABRIEKEN) <br> * Anspruch; Figur * <br> --- | 1 | RECHERCHIERTE, SACHGEBIETE (Int. Cl.4) |
| A | FR-A-2 263 210 (GENERAL ELECTRIC CO.) <br> * Ansprüche 4,5 * <br> ----- | 1,2 | C 04 B 37/00 |

Der vorliegende Recherchenbericht wurde für alle Patentansprüche erstellt

| Recherchenort | Abschlußdatum der Recherche | Prüfer |
|---|---|---|
| DEN HAAG | 07-12-1987 | HAUCK, H.N. |